(19)

Europäisches
Patentamt
European
Patent Office
Office européen
des brevets

(11) **EP 2 781 790 A1**

(12) **EUROPEAN PATENT APPLICATION**
published in accordance with Art. 153(4) EPC

(43) Date of publication:
**24.09.2014 Bulletin 2014/39**

(21) Application number: **11875616.2**

(22) Date of filing: **02.12.2011**

(51) Int Cl.:
*F16H 33/08* (2006.01)          *F04B 9/06* (2006.01)

(86) International application number:
**PCT/UA2011/000122**

(87) International publication number:
**WO 2013/074052 (23.05.2013 Gazette 2013/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2011 UA**

(71) Applicant: **Limited Liability Company "Ukrainian Newenergy Group" ("UNG" Ltd)Ltd Mykolayiv 54001 (UA)**

(72) Inventors:
• **TRUBYANOV, Yuriy Valentynovych Mykolayiv, 54050 (UA)**
• **MYROSHNYCHENKO, Dmytro, Yevgenovych Mykolayiv 54001 (UA)**

(74) Representative: **Benatov, Emil Gabriel et al Dr. Emil Benatov & Partners Asen Peykov Str. No. 6 1113 Sofia (BG)**

(54) **ENERGY GENERATOR**

(57)    The energy generator relates to the field of mechanical engineering, in particular to rotary actuator devices. The device comprises a housing, in which a drive shaft is installed; a driving link, which includes a mechanism for transmitting the rotation of the shaft to elements with an unbalanced mass via a driving wheel that is installed on the drive shaft; a kinematic chain between the driving link and a final consumer, which comprises working nodes which are able to transfer a working moment. According to the claimed technical solution, the driven eccentric wheels are mounted so as to be capable of rotating on additional stationary driven axles, rigidly connected to one another at both ends thereof by a coupling element, namely a rocker arm. The driven axle is equipped with an additional coupling link, which is connected to a movable element of a working chamber with a variable volume; the chamber is connected via a receiver with the final consumer. The device may comprise additional driving wheels and additional driven eccentric wheels that are connected to the same driving wheel and rigidly attached to the same rocker arm in series.

Fig. 5

EP 2 781 790 A1

**Description**

The invention relates to the field of engineering and is associated with device of power drive with the rotary motion (energy generators), in particular inertial systems of energy storage / conversion, and can be used to drive various machines and mechanisms.

There is enough developed designs of inertial energy converters using inertia force resulting from rotation of body, in order to save electrical energy consumed by electric motor.

It is known the Inertial drive device IDD $(ИДУ)$ - 4 (patent RU No. 2076241, 1997) which is a structure in which the rotating in one plane unbalance loads reciprocate motion and provide a continuous unidirectional action of inertial force of these loads. The device used a geometric property of circles inscribed in one another with loads with their diameters in ratio of 1:2 and reverberating in one another without slipping. The main fault of the device is the use of the planetary transmission in its design - the most energy mechanical transmission requiring highly accurate design solutions and very limited in speed characteristics. Since the engine power driving the device is spent only for the rotation of the planetary transmission, the saving of electrical energy consumption is too small in practice.

Also it is known the inertial transmission (patent RU No. 2354873, 2009), in which the design inertial mechanism is made in form of two similar in construction hollow rings of rectangular section, where the internal space is filled with mercury. Pumps, which move mercury at high speed inside the rings, are fixed on the widened parts of the rings. When mercury moves, the inertial forces F and F1 of different values and operating in opposite directions occur. These forces, balanced in no way and acting in different directions, create the couple of forces causing rotation of the slave shaft of the device. The fault of such technical solution is that the inertial transmission transfers rotation in one direction only that decreases the use of all useful work of the inertial mechanism and, respectively, the efficiency factor of the device and its effectiveness in whole. Moreover, the device requires additional energy costs for pump operation.

Besides that, the use of mercury (having large specific gravity) as eccentric mass results to the increased environmental hazards of such device, because, as it is known that mercury belongs to the 1st hazard class, it evaporates easily even at low temperatures and its vapors and compounds are highly toxic.

The most close to the claimed device is the power drive for rotation, in particular, of the electro generator which action is based on the using of intermittent motion mechanism containing a working rotatable unit, to which is applied the alternating rotation moment, generated by the source of mechanical oscillations (patent RU No. 2377458, 2009).

A centrifugal vibrator in the form of an element of unbalanced mass which is rotated freely by motor and is mounted axially to working unit with preset frequency is used as a source of mechanical oscillations. In this case, the motor and the element of unbalanced mass are mounted on the working unit, and an overrunning clutch is used in the intermittent motion mechanism.

In this power the drive centrifugal force of inertia of rotating elements with unbalanced mass (eccentric weight) is used as a source of additional power to its output shaft on power takeoff.

Defects of such technical solution are as follows:

-    presence in the device of the kinematic chain in which links the transformation of motion patterns occurs several times, due to which the rotation motion energy transforms from rotation into reciprocating and further again into rotation, which in turn transforms into electric energy that decreases the efficiency factor of the device in whole taking into account losses to overcome the frictional forces in transmission nodes;
-    an output shaft of the device is imparted with rotation motion with high spin moment and low rotation speed which requires further appliance of the multiplier that in leads to additional power losses and decreases device performance;
-    the location of the source of oscillations (centrifugal generator) on the common rotating platform leads to an increase of its inertial mass, which in turn leads to a decrease of the drive's efficiency factor and failure to use more powerful and heavier centrifugal generator;
-    inertial (centrifugal) generator in the claimed device transfers rotation in one direction only (only in forward motion, not in backward motion of the platform) that decreases use of the useful work generated and respectively efficiency factor of the device and its efficiency in whole. Structurally possible installation of the second overrunning clutch for transfer of rotation in both directions will significantly complicate the construction by addition of one more mechanic transmission. Besides that, the use of overrunning clutches decreases an operation resource and efficiency factor in whole.

The purpose of the proposed technical solution is to increase the efficiency factor of the device, its efficiency and reliability, at simultaneous expansion of technical capabilities by simplifying the kinematic scheme of the device and reduction or eliminating of energy losses to overcome the forces of friction in its structural units and consequently, the possibility to generate energy, power of which is much greater than the power of a master motor.

To achieve this purpose in the device containing housing in which rotatable drive shaft is installed; master unit, including drive shaft's mechanism of rotation transfer via master wheel, rigidly mounted on the drive shaft, to elements of unbalanced mass made in the form of wheels provided with additional loads; kinematic chain between master unit and the end consumer including working nodes allowing transmission of operating moment **according to the claimed technical solution,** shaft's rotation transmission mechanism contains not less than two slave eccentric wheels kinematically connected with master wheel, each of which is fixed rotatable on additional immovable slave axles located in parallel with the drive shaft's axle and on both its ends rigidly connected between themselves with connecting element, the balance beam, which centre is fixed freely on the drive shaft, while each slave axle is provided with additional connecting link which one end is fixed on the axle and its opposite end is connected with movable element of the working chamber with variable volume including inlet valves for the injecting working medium and outlet valves connected via receiver with end consumer.

Thus, in the claimed design:

- slave eccentric wheels of the rotation transmission mechanism are made with similar diameters;
- the balance beam may be made as a geometric shape where the extreme points , places where it is fixed to slave axles are equidistant from the point of fixing of the balance beam to drive shaft, namely: a circle or a regular polygon (a square, an equilateral triangle), or in the form of a cruciform shape, for example : +, ×, ☆;
- mechanism of shaft rotation transmission to elements of unbalanced mass can be made on basis of friction or wheel, or belt, or chain, or worm rotation transmission from the master wheel to the slave wheels;
- loads may be rigidly fixed on the surface of slave eccentric wheels or located inside radial rail which can supply each eccentric wheel, with possibility of their radial moving along the rail under the action of the additionally installed local drive device for load;
- the radial rail may be formed straight, or arc-shaped or spiral with a center coincident with the axis of rotation of the eccentric wheel;
- the local drive device for load may be designed in the form of mechanical (spring or lever) or electrical (in the form of the electromagnet or of the rotor), or electronic, or hydraulic or pneumatic;
- shaft transmission rotation mechanism may contain additional master wheels attached successively along the axis of the drive shaft, with kinematically associated with each of the slave eccentric wheels;
- the device may contain additional eccentric wheel slave kinematically associated with the same master wheel so that each subsequent kinematically slave wheel is connected with the previous one, in this case, all the axes, on which the slave wheels are located, are rigidly fixed sequentially on the same balance beam, center of which is fixed freely on the drive shaft;
- the device may contain additional working chambers on each slave axis, fixed oppose to the first ones, and forming thus working couples;
- the device may contain additional working chambers or a couple of working chambers arranged subsequently on each slave axle;
- as a working chamber with variable volume a cylinder-piston couple or bellows assembly or a closed chamber with a flexible wall (diaphragm) or a pneumatic chamber (pneumatic spring) can be used.

Thus, in the claimed structure the energy of mechanical oscillations occurring under influence of centrifugal forces of the rotating eccentric bodies (wheels) to which radial acceleration from master motor via drive shaft is imparted, doesn't transform into rotation energy with losses, but transfers directly to working node of the device, and via connecting unit to chambers with variable volumes where mechanical energy transforms into energy of compressed media ready for consumer's use without any additional transformations. The energy of the compressed media received in such a way significantly exceeds in capacity the energy expended for rotation of the drive shaft of the device, which in turn significantly increases the efficiency factor of the latter.

Due to the absence of direct and inverse mechanical connection between the master motor (drive shaft) and working chambers with variable volume, the energy consumed by the device is expended solely for achieving by the drive shaft the preset rotation speed at which centrifugal forces from the interaction of uniformly accelerated eccentric bodies occur, i.e. to overcome their start inertia and frictional forces in the bearings. As a result, the efficiency factor of the device substantially increases as a whole and its efficiency.

The balance beam with equal shoulders ensures constant kinematic linkage of the master and slave eccentric wheels and limits motion of the loads by which the eccentric bodies are supplied along the arc relatively to axis of rotation of the drive shaft, which radius is equal to distance between drive shaft and slave axes. The balance beam allows to transfer efforts of eccentric bodies (useful work) in direction of said arc only, being equivalent to both ends of the preset range of motion. I.e. with the help of the balance beam the useful work is generated sequentially in the chambers with variable volume, located diagonally. Thus each direction (up / down) of the efforts transferred from eccentric bodies to the balance beam is working in the claimed device.

In the offered kinematic scheme consisting of the balance beam and eccentric bodies, the useful work at achieved working revolutions of the latter is carried out solely at the expense of the internal forces of the resulted closed-loop system. And as rotating eccentric bodies don't have back kinematic linkage with drive shaft and perform useful work on the slave axes, non-housing unit, this kind of motion is an unsupported motion that does not require additional energy costs.

Presence of the balance beam allows the entire scheme of the device to be self-balanced in relation to the drive shaft axis at any current moment of its operation in response to the stable balanced eccentric wheels on two slave axes and also diagonally balanced chambers with variable volume.

As in the claimed device the motion of the loads has got several degrees of freedom - along the circumference of eccentric bodies and along said arc predetermined by the balance beam motion (adjustable motions of phases, 180° throw-over) and diagonally working chambers with variable volume, it results in smooth operation of the device and the total exclusion of idle moves, which in turn, increases the efficiency factor of the device.

Radial rails of different claimed configurations, by which the eccentric wheels can be supplied and inside of which the load is located, ensure additional (along with movement along the circumference of the eccentric wheel and above the arc defined by the movement of beam motion) radial movement of the load along the rail under influence of the local drive devices.

And as a result it will ensure dynamic change of the eccentric body centre position - moving out from the axis of rotation when rotation speed increases and approximation to it when rotation speed decreases.

It will allow at unchangeable revolutions of the master wheel to change the balance beam's deflection angle in dynamics, which in turn will allow without stopping the entire device's operation to adjust smoothly its power, stroke range of the movable element in the chamber with variable volume and, respectively, quantity indices of the produced working medium. It increases the efficiency factor of the device and improves the working environment.

The possibility to install in the claimed device several slave wheels kinematically linked with the same master wheel on the relevant parallel slave axes and rigidly fixed subsequently on the same balance beam respectively will allow to use several working couples of chambers with variable volume linked by connecting units with each of the slave axes where eccentric bodies are located.

That in turn will allow generating energy in the same device with variable pressure and consumption of working medium in every subsequent working chamber. It respectively increases technical capabilities of the device and its efficiency.

Thus, said features of the device are essential and sufficient to achieve the objective of the invention.

The principle of operation of the claimed device is explained by the following graphic images, showing the version of the device where:

- shaft rotation transmission mechanism contains two master toothed wheels, each of which is associated with two eccentric slave wheels;
- working node contains two working couples of chambers with variable volume (one of the cameras is not shown for a more accurate understanding of circuit device).

At the images are shown:

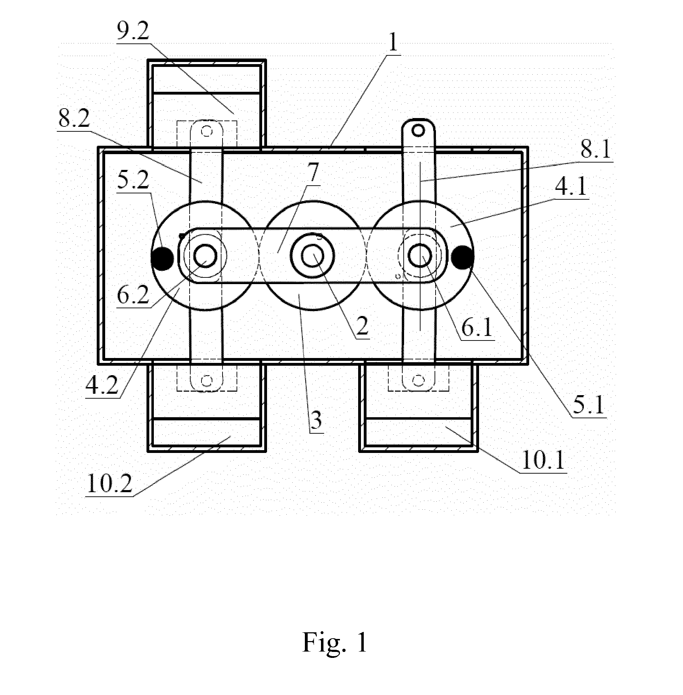

Fig. 1    - scheme of the device (front view), the front housing cover is removed;

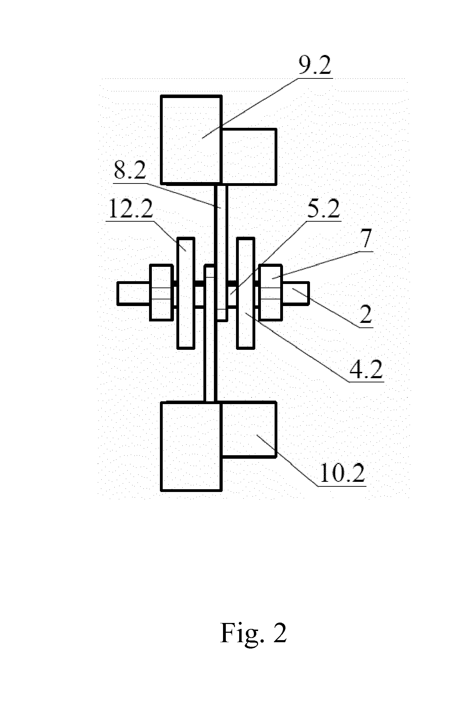

Fig. 2    - scheme of the device (side view);

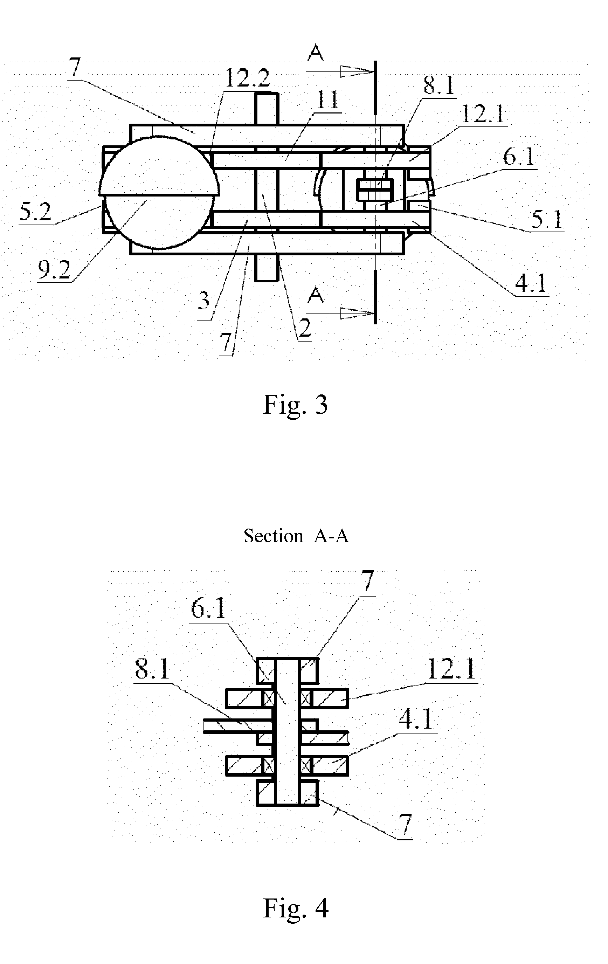

Fig. 3    - scheme of the device (topside view);
Fig. 4    - section A-A of Fig. 3;

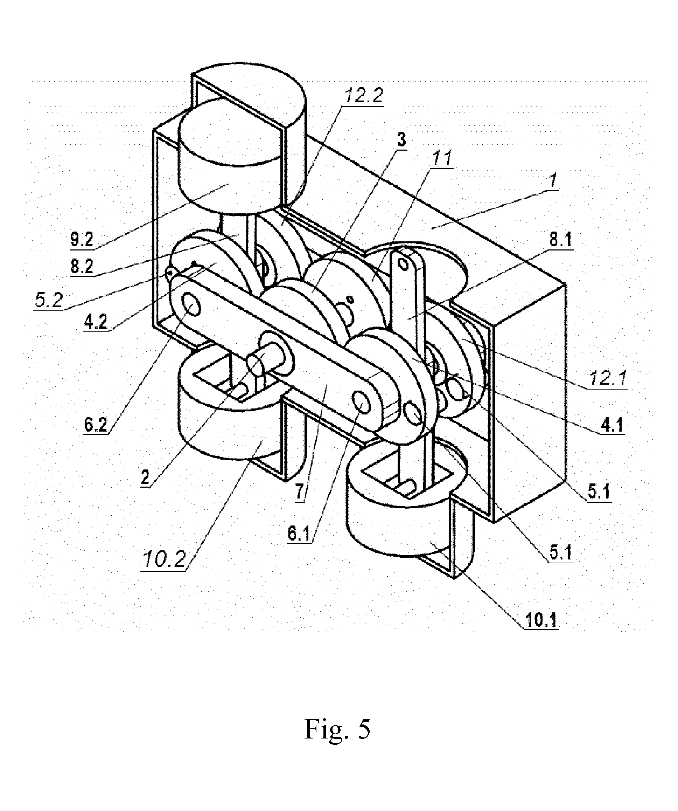

Fig. 5    - general view of the device (axonometric);
Fig. 6    - scheme of distribution of mechanical efforts during operation.

The claimed device contains housing 1, wherein drive shaft 2 is installed on bearings. The master gear 3 is fixed on shaft 2 which are connected by two kinematically driven eccentric gears 4.1 and 4.2 with loads 5.1 and 5.2 respectively. Gears 4.1 and 4.2 are installed on bearings on slave axes, respectively, 6.1 and 6.2 located in parallel to drive shaft 2, fixed rigidly on both sides of the ends of the balance beam 7. Centre of balance beam 7 is fixed freely on bearings on shaft 2. On slave axes 6.1 and 6.2 connecting units respectively 8.1 and 8.2 are installed, each of which, in this case, with their opposite ends connected to the moving elements of one of the working chambers with variable volume respectively, 9.1 and 9.2, and of oppositely located chambers with variable volume, respectively, 10.1 and 10.2.

In this version the device contains additional analogical master gear 11 and connected with it two slave eccentric gears 12.1 and 12.2, analogically fixed, respectively on drive shaft 2 and on slave axes 6.1 and 6.2 on the side opposite to connecting units respectively 8.1 and 8.2.

In order to avoid unwanted possible occurring unbalanced vibrations during operation of the device at different operating speeds of the drive shaft, the technical solution with four chambers (two cameras per eccentric body) with a variable volume is preferred.

The claimed device operates as follows.

Master power source, such as an electric motor, internal combustion engine, a wind generator, hydro-generator, etc., effort is fed to the drive shaft 2, which is accelerated to a predetermined rotational speed, and drives the master gear 3. In turn, gear 3 drives two slave eccentric gears 4.1 and 4.2, which are free to rotate on bearings fixed in relation to the slave axes, respectively, 6.1 and 6.2.

Gear ratio 1:1 of toothed wheels (master and slave, in case, when they all have identical diameters) provides equivalent cyclical spatial location of the eccentric bodies during each of their complete revolution with respect to their axes of rotation. In case of need to change the gear ratio, subject to an equivalent synchronization of the eccentric wheels, slave and master toothed wheels are made with different diameters calculated for the analogical effort transmission with a calculated necessary distortion more / less) of gear ratio.

Upon rotation of loads 5.1 and 5.2, they are subjected to a centrifugal force of inertia, under the influence of which increases the force of eccentric bodies 4.1 and 4.2 on slave axes, respectively, 6.1 and 6.2, and the balance beam 7 starts reciprocate deviate from its initial position.

Due to the cyclical change in direction of the centrifugal force balance beam 7, synchronously with eccentric bodies 4.1 and 4.2 makes oscillatory motion. The oscillation amplitude is always given and is equal to 2 distances to the points of the extreme positions of the center of mass of loads 5.1 and 5.2, which are determined by calculation.

Efforts of eccentric bodies 4.1 and 4.2, when the balance beam achieves extreme point of deviation, are transferred instantly, i.e. the moment value is constant relatively to the drive shaft. Only their direction changes for 180 degrees at the balance beam's extreme point of deviation when centrifugal force of the loads maximally coincides with the direction of the balance beam, i.e. phase changes smoothly, allowing to take useful effort effectively in both directions.

Through the kinematic chain "Balance beam 7 - slave axes 6.1 and 6.2 - the connecting units 8.1 and 8.2 - movable elements of the chambers with variable volume 9.1, 9.2, 10.1, 10.2" any direction of the oscillation motion of the balance beam drives the movable elements of all chambers with variable volume. In this case, processes of working medium compression in two diagonally opposite chambers 9.1 and 10.2 at balance beam's clockwise deviation and filling processes of the working medium in two diagonally opposite chamber 10.1 and 9.2 - at balance beam's counterclockwise deviation occur simultaneously. I.e. any direction of the oscillation motion of balance beam 7 is working, when useful work is effected subsequently in all couples of chambers with variable volume.

Working medium pressurized by the exhaust valves (are not shown in the schemes) with variable volume chambers is transferred to the final consumer. As the working medium may be used the liquid, gas, air, depending on the set output operating parameters of the claimed devices and conditions (including environmental conditions) of operation.

Exhaust valves of the working chambers may be connected with the end consumer through the receiver, where the energy of the compressed medium can be lossless (in contrast to electrical energy) accumulated for a long time, stored and transported, if necessary, over long distances without use of additional communications in the form, for example, of electric power transmission lines. In addition, it can be used in case of the required increase in power consumption by end consumer of the claimed device. This makes it more efficient in comparison with known devices.

An additional advantage of the claimed structure is its capability to perform an additional function, namely, to create and maintain vacuum in various processing devices, systems and facilities and pump the air and steam-gas mixtures in reservoirs, creating vacuum therein. Moreover, it does not require additional structural transformations, it is enough to swap the functions of input and exhaust valves of the chambers with variable volume. Thus, each of them will operate in the "reverse direction". With the claimed device the medium vacuuming process will also become simple and economical. The presence of such additional function of the device extends its technical capabilities and makes it universal.

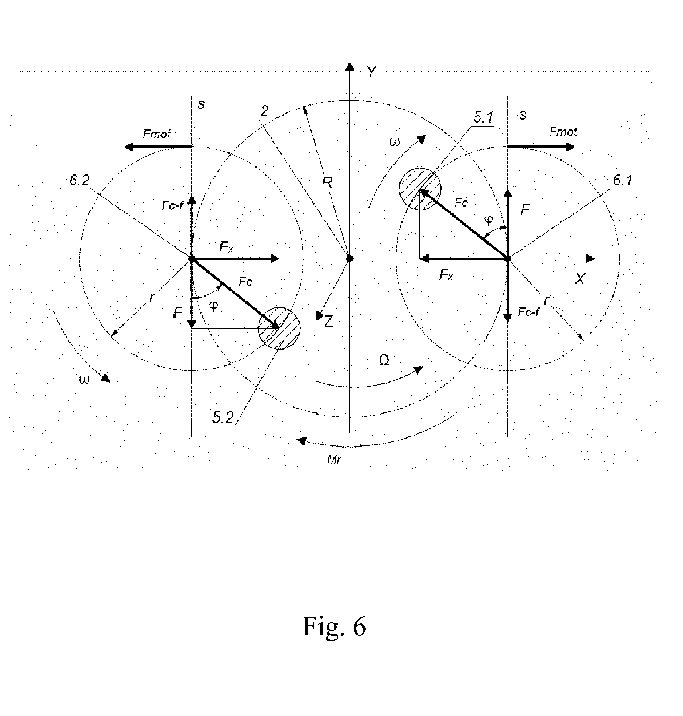

Scheme of force distribution during operation of the claimed device is shown in Fig. 6, where the following letter designations are used:

X, Y, Z — coordinate axes;

R — radius of the path of movement of the slave eccentric gear 4.1 (or 4.2), the distance from the center of rotation of drive shaft 2 to the center of rotation of each of the slave axes 6.1 and 6.2;

$\Omega$ — angular velocity of the balance beam fluctuations effecting oscillation motion relatively to drive shaft 2 with radius equal to R ;

$\omega$ — the angular velocity of rotation of the slave eccentric gears (angular frequency of rotation of loads 5.1 and 5.2);

r — radius of rotation of the center of mass of loads 5.1 and 5.2;

$F_{mot}$ — the force applied from the drive motor to the loads under the action of which they are rotated with the

frequency $\omega$;

$F_{c-f}$     - counter force;

$F_c$     - centrifugal force;

$F_x$     - radial component of the centrifugal force;

$M_r$     - load resistant moment;

$\varphi$     - angle between $F_c$ и F.

As a result of operation of drive motor of capacity of 2,2 kW, angle velocity of 298,8 $s^{-1}$ (2850 RPM) is transmitted to drive shaft 2. At this time master gear 3 which is rigidly fixed on the shaft rotates with the same speed. Since, the gear ratio of each of the master and slave gears is 1:1 (in the illustrated example it is assumed that the diameters of the master and slave gears are equal to each other), the angular velocity of rotation of the slave gears $\omega$, on which the loads 5.1 and 5.2 are fixed, is 298,8 $s^{-1}$, too. The rotation of the eccentric bodies (slave gears) creates a centrifugal force of value:

$$F_c = m \bullet \omega^2 \bullet r = 8570 \text{ N,}$$

where:

m     - mass of each load, assumed as 1600 g;

r     - distance to the centers of mass of loads assumed as 30 mm.

Radial component $F_x$ of the centrifugal force $F_c$ doesn't affect operation of the device because it is balanced by similar force created by symmetrically located second eccentric body. Instantaneous value of the tangential (to the path of radius R) and radial simultaneously - to the path of radius r, component of centrifugal force $F_c$ is a force F, which is applied along line S to axis of the eccentric and from there - to the chamber with variable volume, and is equal to:

$$F = 2 \bullet m \bullet \omega^2 \bullet r \bullet \cos\omega t,$$

where:

digit 2 indicates number of loads;

t - time of rotation, s.

This force at t=0 is equal to:

$$F = 8570 \text{ N}$$

Instantaneous value of radial velocity of the loads (along r and S) is equal to:

$$V = \omega \bullet r \bullet \cos\omega t .$$

And at t=0: V = 9 m/s

Thus, the angular rotation velocity $\Omega$ of the master gear around Z axis is significantly less than the angular velocity $\omega$, therefore, it may be neglected. Moment created by force F relatively to axis Z (exert moment) is equal to:

$$M = F \bullet R ,$$

where R - distance from axis Z to loads rotation axes, m,
then:

$$M = 8570 \bullet 0,14 = 1200 \text{ Nm.}$$

In the particular case of rotation motion, capacity is equal:

$$P = M \bullet \omega_b \text{ if } \omega_b = \varphi /t,$$

where:

$\omega_b$    - angle velocity of the balance beam rotation, rad/s;
$\varphi$    - balance beam turn angle, equal to 0,42 rad;
t    - time for which the balance beam makes one fluctuation, equal to 0,02 s.

Then:

$$\omega_b = 0,42 / 0,02 = 21 \text{ rad/s,}$$

consequently, theoretical capacity of the balance beam is:

$$P = 1200 \bullet 21 = 25200 \text{ (Wt)} = 25,2 \text{ kW.}$$

Wherefrom it follows that the theoretical capacity of the balance beam (25,2 kW) more than 10 times exceeds the initial motor capacity (2,2 kW), rotating drive shaft.
In the claimed device the size and weight of the eccentric bodies is designed so that the balance beam 7 deviates by a predetermined value at rated speed of drive shaft 2, carrying out oscillating movements with a predetermined amplitude and via connecting units 8.1 and 8.2 transmits efforts of eccentric bodies equal to the force F to the chambers with variable volume. While movable elements in chambers with variable volume move for the distance equal to given amplitude of balance beam's oscillations 7.
I.e. in the claimed device, only the force F is used to generate in the chambers with variable volume of compressed working medium with high (excessive) pressure. Thus, drive motor energy, consuming by the device directly to increase pressure of working medium in chambers, doesn't increase.
Moreover, as above calculations show, the energy generated by the claimed device and transmitted to the end consumer of compressed medium, numerously (more than 10 times) exceeds the capacity of motor spent for the drive of the device, which indicates the high efficiency factor of the device as a whole.
Comparative estimate characteristics of efforts (loading) distribution during operation of the claimed device and of one of the known devices for producing (generating) an energy source in the form of a compressed medium (air), in particular a reciprocating compressor, are shown below.
Calculations are performed for the following example of compared devices:

- standard scheme of reciprocating compressor, when effort of drive motor transmits directly to piston group (consisting of 3 cylinders) via a crank mechanism:

- claimed scheme of the device when kinematic connection between drive motor and piston group (chosen as a version of design of the chamber with variable volume) consisting of 4 cylinders, is unlinked.

Here it is assumed that in compared devices:

d    - diameters of the pistons are equal to 80 mm;
S    - squares of the pistons are equal to $\pi d^2/4 = 0,005024$ m$^2$;
P    - operation pressure is equal to 10 atm. (1,013 MPa).

1. In the known device:

a) calculation of response loading of the compressed medium for the moment of injection and suction cycle for one cylinder:

$$F_{response} = P \bullet S = 5,0 \text{ kN};$$

b) calculation of mechanical resistance of the piston group (friction of the rings), rolling and sliding bearings for one cylinder:

$$F_{resistance} = 0,3 \text{ kN};$$

Overall, one cylinder is required to overcome a force of 5,3 kN. For crank mechanism for the three cylinders, in this case, the motor with capacity of 18,5 kW will be required.

2. In the claimed device:

a) calculation of response loading of the compressed medium for the moment of injection and suction cycle for one cylinder:

$$F_{response} = P \bullet S = 5,0 \text{ kN};$$

b) calculation of mechanical resistance of the piston group (friction of the rings), rolling and sliding bearings for one cylinder:

$$F_{resistance} = 0,3 \text{ kN}.$$

Overall it is required to overcome the instantaneous maximum effort for two cylinders (at the same time two cylinders operate in suction mode, and the other two - in the injection mode), equal to:

$$F = 2 \bullet (F_{response} + F_{resistance}) = 10,6 \text{ kN}.$$

Since in the claimed scheme there is no direct kinematic connection between the drive motor and piston group, the calculation of the motor capacity is made as follows.
We estimate the required motor capacity designated for rotation of loads, provided that their efforts will produce the estimated useful action of 10,6 kN at angular velocity 2850 RPM.
In the established (running) mode drive motor capacity is spent only to overcome friction in the bearings and in gears.
Calculation of capacity losses in the bearing $C_L$ follows these formulas:

$$C_L = 1{,}047 \bullet 10^{-3} \bullet M_{fr} \bullet n, \ \text{at} \ M_{fr} = 0{,}5 \bullet k \bullet F_b \bullet d,$$

where:

$M_{fr}$  - friction moment (N cm);
n    - revolution frequency, equal to 2,850 RPM;
k    - friction coefficient, equal to 0,001;
$F_b$   - complete loading to bearing equal to 2,65 kN and determined as $F_b$ = F/4,because effort is distributed on 4 bearings;
d    - diameter of the hole in the bearing, equal to 2,5 cm.

Friction moment will be equal to:

$$M_{fr} = 0{,}5 \cdot 0{,}001 \cdot 2650 \cdot 2{,}5 \approx 3{,}3 \ \text{N} \cdot \text{cm},$$

and capacity losses in one bearing:

$$C_L = 1{,}047 \bullet 10^{-3} \bullet 3{,}3 \bullet 2850 \approx 12{,}0 \ \text{Wt.}$$

The total number of the bearings is 4 pieces, that's why losses in them will be equal to 48 Wt.
Losses in toothed gear wheeling have got value about 400 Wt.
The total losses will amount to about 0,5 kW.
To drive the device you can use the drive electric motor with capacity reserve of 2,2 kW.
The calculated data confirms that under the relevant indices of performance and pressure characteristics of the compressed medium for drive of the known device (classic with a crank mechanism) it's necessary to spend a few times more electric capacity that for the drive of the claimed device.
Thus, the claimed technical solution allows receiving, accumulating, storage, transporting (in particular, in sealed containers) and carrying for any distance of cheap, environmentally friendly energy source - compressed medium. The cost of production (generation) of the energy source is reduced by several times without loss of volume due to the saving of any energy consumed by the device in whole.

**Claims**

1. Energy generator, containing housing in which rotatable drive shaft is installed; master unit, including drive shaft's mechanism of rotation transfer via master wheel, rigidly mounted on the drive shaft, to elements of unbalanced mass, made in the form of wheels provided with additional loads; kinematic chain between master unit and the end consumer including working nodes allowing transmission of operating moment, **characterized in that** shaft's rotation transmission mechanism contains not less than two slave eccentric wheels kinematically connected with master wheel, each of which is fixed rotatable on additional immovable slave axles located in parallel with the drive shaft's axle and on both its ends rigidly connected between themselves with connecting element, the balance beam, which centre is fixed freely on the drive shaft, while each slave axle is provided with additional connecting link which one end is fixed on the axle and its opposite end is connected with movable element of the working chamber with variable volume including inlet valves for the injecting working medium and outlet valves connected via receiver with end consumer.

2. Energy generator, according to claim 1, **characterized in that** slave eccentric wheels of the rotation transmission mechanism are made with similar diameters.

3. Energy generator, according to claims 1-2, **characterized in that** the balance beam is made as a geometric shape where the extreme points, places where it is fixed to slave axles are equidistant from the point of fixing of the balance beam to drive shaft, namely: a circle or a regular polygon (a square, an equilateral triangle), or in the form of a cruciform shape.

4. Energy generator, according to claims 1-3, **characterized in that** mechanism of shaft rotation transmission to elements of unbalanced mass is made on basis of friction or wheel, or belt, or chain, or worm rotation transmission from the master wheel to the slave wheels.

5. Energy generator, according to claims 1-4, **characterized in that** loads are rigidly fixed on the surface of slave eccentric wheels.

6. Energy generator, according to claims 1-4, **characterized in that** each eccentric wheel is provided with radial rail inside which load is located with possibility of its radial movement along the rail under influence of the local drive devices for loads installed additionally.

7. Energy generator, according to claim 6, **characterized in that** the radial rail is formed straight, or arc-shaped or spiral with a center coincident with the axis of rotation of the eccentric wheel.

8. Energy generator, according to claims 6, 7, **characterized in that** local drive device for load may be designed in the form of mechanical (spring or lever) or electrical (in the form of the electromagnet or of the rotor), or electronic, or hydraulic or pneumatic.

9. Energy generator, according to claims 1-8, **characterized in that** shaft transmission rotation mechanism contains additional master wheels attached successively along the axis of the drive shaft, with kinematically associated with each of them slave eccentric wheels.

10. Energy generator, according to claims 1-9, **characterized in that** device contains additional eccentric wheel slave, kinematically associated with the same master wheel, so that each subsequent kinematically slave wheel is connected with the previous one, in this case, all the axes, on which the slave wheels are located, are rigidly fixed sequentially on the same balance beam, which center is fixed freely on the drive shaft.

11. Energy generator, according to claims 1-10, **characterized in that** device contains additional working chambers on each slave axis, fixed oppose to the first one, and forming thus working couples.

12. Energy generator, according to claims 1-11, **characterized in that** the device contains additional working chambers or a couple of working chambers arranged subsequently on each slave axle.

13. Energy generator, according to claims 1-12, **characterized in that** it is used as a working chamber with variable volume of a cylinder-piston couple or bellows assembly or a closed chamber with a flexible wall (diaphragm) or a pneumatic chamber (pneumatic spring).

Fig. 1

Fig. 2

Fig. 3

Section A-A

Fig. 4

Fig. 5

Fig. 6

## INTERNATIONAL SEARCH REPORT

| International application No. |
|---|
| PCT/UA 2011/000122 |

**A. CLASSIFICATION OF SUBJECT MATTER**

F16H 33/08 (2006.01); F04B 9/06 (2006.01)

According to International Patent Classification (IPC) or to both national classification and IPC

**B. FIELDS SEARCHED**

Minimum documentation searched (classification system followed by classification symbols)

F16H 33/00-33/14, F04B 9/06

Documentation searched other than minimum documentation to the extent that such documents are included in the fields searched

Electronic data base consulted during the international search (name of data base and, where practicable, search terms used)

RUPAT, ESP@CENET, PATSEARCH, PAJ, USPTO DB

**C. DOCUMENTS CONSIDERED TO BE RELEVANT**

| Category* | Citation of document, with indication, where appropriate, of the relevant passages | Relevant to claim No. |
|---|---|---|
| A | SU 958747 A (I. M. DANILCHENKO) 25.09.1982, the abstract, fig. 1-3 | 1-13 |
| A | SU 1307137 A2 (I. M. DANILCHENKO) 30.04.1987, the abstract | 1-13 |
| A | SU 89256 A (N. N. RAKHMANOV) 09.02.1962, tha claims, fig. 1 | 1-13 |
| A | SU 892061 A (CHELYABINSKY POLITEKHNICHESKY INSTITUT IM. LENINSKOGO KOMSOMOLA) 28.12.1981 | 1-13 |
| A | DE 2914642 A1 (SCHULER, GERHARD) 23.10.1980 | 1-13 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 May 2012 (04.05.2012) | 12 July 2012 (12.07.2012) |

| Name and mailing address of the ISA/ | Authorized officer |
|---|---|
| | |
| Facsimile No. | Telephone No. |

Form PCT/ISA/210 (second sheet) (July 1998)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2076241
- RU 2354873
- RU 2377458